# EUROPÄISCHE PATENTSCHRIFT

(11) **EP 3 158 871 B1**
(45) Veröffentlichungstag und Bekanntmachung des Hinweises auf die Patenterteilung: **06.06.2018**
(21) Anmeldenummer: 15190470.3
(22) Anmeldetag: 19.10.2015
(51) Int. Cl.: A23C 9/12, A23C 9/142, A23C 9/15

(54) **VERFAHREN ZUR HERSTELLUNG VON LACTOSEFREIEN MILCHPRODUKTEN**
PROCESS FOR MAKING LACTOSE FREE DAIRY PRODUCTS
PROCEDE POUR LA PREPARATION DE PRODUITS LAITIERS SANS LACTOSE

(43) Veröffentlichungstag der Anmeldung: 26.04.2017
(73) Patentinhaber: DMK Deutsches Milchkontor GmbH, 27404 Zeven (DE)
(72) Erfinder: Aschemann, Jan, 27404 Zeven (DE); Oehlckers, Thorben, 27404 Zeven (DE); Döring, Sven-Rainer, 27404 Zeven (DE)
(74) Vertreter: Fabry, Bernd

(56) Entgegenhaltungen:
- EP-A1- 2 050 341
- EP-A1- 2 907 393
- WO-A1-2008/000895
- WO-A1-2012/056106
- DE-A1- 2 354 475
- US-A1- 2005 196 508
- US-A1- 2010 055 286
- US-A1- 2010 055 289
- US-A1- 2011 059 220
- US-A1- 2013 142 904
- VYAS H K ET AL: "PROCESS FOR CALCIUM RETENTION DURING SKIM MILK ULTRAFILTRATION", JOURNAL OF DAIRY SCIENCE, AMERICAN DAIRY SCIENCE ASSOCIATION, US, Bd. 86, Nr. 9, 2003, Seiten 2761-2766, XP001174706, ISSN: 0022-0302, DOI: 10.3168/JDS.S0022-0302(03)73872-7

## Beschreibung

### GEBIET DER ERFINDUNG

Die Erfindung befindet sich auf dem Gebiet der lactosefreien Milcherzeugnisse und betrifft die Erzeugung von Milchprodukten mit gegenüber der Ausgangsmenge verminderten, jedoch definierten Lactosegehalten und weitgehend identischer Mineralienzusammensetzung, die sich in lactosefreie Produkte umwandeln lassen, ohne dabei eine Änderung des Geschmacksprofils der Ausgangsmilch aufzuweisen.

### STAND DER TECHNIK

Neugeborene Säugetiere bilden während ihrer Stillzeit das Enzym Lactase, welches das Disaccharid Milchzucker in die vom Stoffwechsel verwertbaren Zuckerarten D-Galactose und D-Glucose spaltet. Im Laufe der natürlichen Entwöhnung von der Muttermilch sinkt die Aktivität der Lactase auf etwa 5-10 % der Aktivität bei der Geburt. Das gilt für den Menschen und alle anderen Säugetiere. Nur bei Populationen, die seit langer Zeit Milchwirtschaft betreiben, hat sich eine Mutation durchgesetzt, die dazu führt, dass auch noch im Erwachsenenalter genügend Lactase produziert wird (Lactasepersistenz). Vermutlich liegt das daran, dass die höhere Lactaseaktivität einen Selektionsvorteil (Mineralstoffe, Nährwert) für diese Gruppen bot.

Bei mangelhafter Lactaseaktivität gelangt ungespaltener Milchzucker beim Menschen bis in den Dickdarm, wo er von Darmbakterien aufgenommen und vergoren wird. Als Gärungsprodukte entstehen Milchsäure sowie Methan und Wasserstoff. Die Gase führen unter anderem zu Blähungen, die osmotisch aktive Milchsäure zu einem Wassereinstrom in den Darm (osmotischer Diarrhoe).

In Asien und Afrika betrifft die fehlende Lactasepersistenz bzw. Lactoseintoleranz den größten Teil der erwachsenen Bevölkerung (90 % oder mehr), in Westeuropa, Australien und Nordamerika sind es 5-15 % (bei hellhäutigen Menschen). In Deutschland leiden nach Schätzungen 15-25 % der Gesamtbevölkerung an einer Milchzuckerunverträglichkeit. Der Grund für eine Lactoseintoleranz ist ein angeborener Enzymmangel, bei dem die entsprechenden Enzyme fehlen, die den Milchzucker in seine Einzelteile aufspalten und abbauen. In den letzten Jahren ist zumindest das Bewusstsein für einen Zusammenhang der genannten Symptome mit der Anwesenheit von Lactose insbesondere in Milchprodukten stark gewachsen. Dies hat dazu geführt, dass es ein großes Bedürfnis nach lactosearmen oder besser noch lactosefreien Produkten gibt.

Aus dem Stand der Technik sind unterschiedlichste Verfahren bekannt, mit deren Hilfe man Lactose aus Milchprodukten entweder abtrennt und als Nebenprodukt weiterverarbeitet oder durch Zugabe entsprechende Enzyme abbaut.

Gegenstand der EP 1503630 B1 (VALIO) ist beispielsweise ein Verfahren zur Herstellung von lactosefreien Produkten, bei dem die Ausgangsmilch zunächst einer Ultrafiltration unterworfen wird. Das dabei anfallende erste Permeat wird nanofiltriert, wobei die Lactose über das zweite Retentat ausgeschleust wird und die einwertigen Salze (Natrium, Kalium) in das zweite Permeat gelangen. Dieses wird mit Hilfe einer Umkehrosmose aufkonzentriert und das so erhaltene dritte Retentat dem ersten Retentat wieder beigemischt, bevor dieses dann einer Hydrolyse unterworfen wird, um die Lactose enzymatisch abzubauen. Das Verfahren hat indes zwei erhebliche Nachteile: der Lactosegehalt des Retentats, welches hydrolysiert wird, lässt sich nicht steuern, sondern stellt sich aufgrund der Bedingungen in der Ultrafiltration automatisch auf einen sehr niedrigen Wert ein. In der Hydrolyse stehen dann auch nur geringe Mengen an Zucker für die Spaltung zur Verfügung, so dass eine zwar lactosefreie Milch erhalten wird, die jedoch weit weniger süß und geschmacklich ansprechend ist, wie die Ausgangsmilch. Des Weiteren gelangen über den Prozess nur Alkalisalze in die Milch zurück. Um das Geschmacksprofil der Ursprungsmilch wieder einigermaßen zu erreichen, müssen zweiwertige Salze aus anderen Quellen wieder zugesetzt werden. In Summe wird jedenfalls ein Produkt erhalten, welches dem gewünschten Geschmacksprofil der Ausgangsmilch nur angenähert entspricht.

Ein ähnlicher Weg wird in der EP 2207428 B1 (ARLA) vorgeschlagen: hier wird die Milch ebenfalls zunächst einer Ultrafiltration unterworfen, wobei das Permeat dann nanofiltriert wird. Das Permeat aus der Nanofiltration wird mit dem Retentat aus der Ultrafiltration vermischt und anschließend hydrolysiert. Dieses Verfahren weist jedoch bezüglich des Geschmacksprofils der resultierenden Produkte die gleichen Nachteile wie das Valio-Verfahren Weitere Verfahren zur Herstellung von lactosefreien Produkte werden in den Dokumenten EP 2 050 341 A1 (Shanghai Shanglong Dairy Co.), US 2011/0059220 A1 (VALIO) oder US 2010/0055289 A1 (VALIO) vorgeschlagen.

Die Aufgabe der vorliegenden Erfindung hat daher darin bestanden, ausgehend von Vollmilch, Magermilch oder standardisierter Milch, welche typisch zwischen 4 und 5 Gew.-% Lactose aufweist, eine an Lactose abgereicherte Milchzusammensetzung bzw. im Wesentlichen lactosefreie Milch zur Verfügung zu stellen, die jedoch über die gleiche oder die im Wesentlichen gleiche Mineralienzusammensetzung wie die Ausgangsmilch verfügt, um auf diese Weise lactosefreie Produkte herstellen zu können, deren Geschmacksprofil dem der Ausgangsmilch entspricht.

### BESCHREIBUNG DER ERFINDUNG

Ein erster Gegenstand der Erfindung betrifft ein Verfahren zur Herstellung von Milchprodukten mit Lactosegehalt unter 0,1 Gew.-% wie in Anspruch 1 definiert. Das Verfahren zeichnet sich dadurch aus, dass die Ausgangsmilch oder deren Hydrolyseprodukt vor der Weiterbehandlung einem Schritt unterworfen wird, bei dem die überwiegende Menge an Calcium ausgefällt wird. Dabei wird die Ausgangsmilch, bei der es sich typisch um Vollmilch, Magermilch oder Standardmilch handelt, einer Temperaturbehandlung im Bereich von etwa 55 bis etwa 65°C unterworfen, wobei die Behandlungszeit in der Regel zwischen etwa 5 und etwa 25 Minuten liegt.

Überraschenderweise wurde gefunden, dass durch eine gezielte Wärmevorbehandlung ein großer Teil, insbesondere mehr als 50 Gew.-% und vorzugsweise etwa 80 bis etwa 95 Gew.-% des in der Milch frei gelösten Calciums ausfällt und größere Partikel bildet, die in nachfolgenden Filtrationsschritten im Retentat verbleiben. Die resultierenden Produkte weisen gegenüber solchen ohne Präzipitationsschritt hergestellten Vergleichsprodukten einen deutlich verbesserten Geschmack auf.

Dieser Schritt ist entscheidend für die geschmackliche Eignung aller nachfolgend hergestellten Milchprodukte mit definiertem Lactosegehalt bzw. für entsprechend lactosefreie Produkte. Unter "lactosefrei" oder "im Wesentlichen lactosefrei" wird nachfolgend verstanden, dass der Gehalt an Lactose im Endprodukt unter 0,1 Gew.-% und insbesondere unter 0,01 Gew.-% liegt.

### VERFAHRENSVARIANTE 1

In einer ersten Ausgestaltung der vorliegenden Erfindung wird ein Verfahren zur Herstellung von Produkten mit Lactosegehalt unter 0,1 Gew.-% beansprucht, welches die folgenden Schritte umfasst:
(a) Erwärmen einer Ausgangsmilch über einen Zeitraum von 5 bis 25 Minuten auf 55 bis 65 °C;
(b) Ultrafiltration des Präzipitationsproduktes aus Schritt (a) zur Erzeugung eines ersten Permeats P1 und eines ersten Retentats R1;
(c) Umkehrosmose des ersten Permeats P1 zur Erzeugung eines zweiten Permeats P2 und eines zweiten Retentats R2;
(d) Decalcifizierung des zweiten Retentats R2;
(e) Ultrafiltration des decalcifizierten Produktes aus Schritt (d) zur Erzeugung eines dritten Permeats P3 (Lactosekonzentrat) und eines dritten Retentats R3 (Mineralienkonzentrat);
(f) Vermischen des ersten Retentats R1 mit jeweils einer solchen Menge des dritten Permeats P3 sowie des dritten Retentats R3, so dass ein standardisiertes Milchprodukt mit einer definierten Konzentration an Lactose und Salzen erhalten wird sowie
(g) Hydrolyse des standardisierten Milchproduktes aus Schritt (f) unter Zugabe einer solchen Menge an Lactase, dass die im Produkt enthaltene Menge an Lactose vollständig in Glucose und Galactose gespalten wird.

Diese Ausgestaltungsform der Erfindung, die den Schritt (g) noch miteinschließt, betrifft also den Fall, dass der Lactosegehalt in der Milch letztlich Null ist.

Im Sinne dieser Verfahrensvariante wird die Milch zunächst in eine proteinreiche/lactosearme und eine proteinarme/lactosereiche Fraktion aufgetrennt, letztere zunächst aufkonzentriert und in ein Salz- und ein Lactosekonzentrat separiert, und die beiden Konzentrate der ersten proteinreichen/lactosearmen Fraktion in solchen Mengen wieder zugesetzt ("Standardisierung"), dass sich die Zusammensetzung der Ausgangsmilch wieder ergibt, die Menge an Lactose jedoch deutlich vermindert ist. Vorzugsweise stellt man bei der Rückvermischung den Lactosegehalt auf etwa ein Viertel des Ausgangswertes ein. Bei der nachfolgenden Hydrolyse zerfällt die Lactose in ein Molekül Glucose und ein Molekül Galactose. Untersuchungen zur relativen Süßkraft (rS) verschiedener Kohlenhydrate bezogen auf Saccharose (nach Noeske, 1996) ergaben, dass sowohl Glucose (rS=64) als auch Galactose (rS=60) jeweils in etwa die doppelte Süßkraft im Vergleich zu Lactose (rS=30) aufweisen. Reduziert man also die Lactosemenge vor der Hydrolyse auf ein Viertel des Ausgangswertes, entsteht gerade wieder die erforderliche Zuckermenge, mit der die gleiche Süßkraft der Ausgangsmilch erreicht wird. Dadurch schmeckt die Milch nicht süßer als zuvor. Dadurch, dass man der Milch bei der Standardisierung keine Fremdsalze, sondern Eigensalze zusetzt, wird nach der Hydrolyse in Summe ein Produkt erhalten, das zwar lactosefrei ist, sich aber ansonsten in der Zusammensetzung von der Ausgangsmilch nicht unterscheidet und daher den gleichen Geschmackseindruck aufweist.

Selbstverständlich ist es mit Hilfe des Verfahrens ebenfalls möglich, einen sehr niedrigen Lactosegehalt einzustellen - beispielsweise, indem man dem ersten Retentat R1 gar kein oder nur sehr wenig Lactosekonzentrat (Permeat P3) zusetzt. Dementsprechend wird dann nach der Hydrolyse eine ungesüßte, sehr kalorienarme Milch erhalten.

### 1. ULTRAFILTRATION

Im ersten Verfahrensschritt wird die Ausgangsmilch, bei der es sich um Vollmilch, Magermilch oder standardisierte Milch mit einem Lactosegehalt im Bereich von etwa 3 bis etwa 5 Gew.-% und vorzugsweise etwa 4 bis etwa 4,5 Gew.-% handeln kann, in eine proteinreiche und lactosearme sowie eine proteinarme und lactosereiche Fraktion aufgetrennt.

Die Ultrafiltration gehört zu den Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch *"Cut-off"*) bei 100 nm oder darüber, spricht man von Mikrofiltration. Liegt die Ausschlussgrenze in dem Bereich zwischen 2 bis 100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1m² Membranfläche bezogen. Ihre Einheit ist l/(m²h bar).

In einer bevorzugten Ausführungsform des erfindungsgemäßen Verfahrens wird die Ultrafiltration unter Zugabe einer solchen Menge Diawassers durchgeführt, dass ein erstes Retentat mit einem Verdünnungsfaktor von etwa 5 bis etwa 20 erhalten und vorzugsweise etwa 8 bis etwa 12 erhalten wird. Vorzugsweise bezieht man dabei das Diawasser aus dem zweiten Permeat P2 der nachfolgenden Umkehrosmose.

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Dem hingegen bevorzugt beispielsweise die Nanofiltration Porendurchmesser im Bereich von 100 bis 1.000 und vorzugsweise etwa 150 bis 800 Dalton.

Der Werkstoff der Filterfläche kann Edelstahl, Polymerwerkstoffe, Keramik, Aluminiumoxid oder textile Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Ultrafiltration kann im Sinne der vorliegenden Erfindung "heiß" oder "kalt", d.h. im Temperaturbereich von etwa 4 bis etwa 55 °C durchgeführt werden. Bevorzugt ist es jedoch, bei Temperaturen im niedrigen Bereich von etwa 4 bis etwa 25 °C und insbesondere etwa 8 bis etwa 18 °C zu arbeiten.

### UMKEHROSMOSE

Das erste Permeat P1 der Ultrafiltration ist praktisch frei von Proteinen, enthält jedoch Lactose und Mineralien in gegenüber der Ausgangsmilch praktisch unveränderten Konzentrationen. In der folgenden Umkehrosmose wird die Menge an diesen beiden Komponenten aufkonzentriert.

Die Umkehrosmose oder Reversosmose ist ein physikalisches Verfahren zur Aufkonzentrierung von in Flüssigkeiten gelösten Stoffen, bei der mit Druck der natürliche Osmose-Prozess umgekehrt wird. Das Medium, in dem die Konzentration eines bestimmten Stoffes verringert werden soll, ist durch eine halbdurchlässige (semipermeable) Membran von dem Medium getrennt, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen.

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die übrigen Moleküle zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren.

Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen. Druckaustauscher senken durch Energierückgewinnung sehr effektiv die Betriebskosten einer Umkehrosmoseanlage. Der Energieaufwand pro Kubikmeter Wasser liegt bei 4 bis 9 kWh. Vorzugsweise beträgt der Konzentrierungsfaktor im erfindungsgemäßen Verfahren etwa 2,5 bis etwa 5 und insbesondere etwa 3 bis etwa 4.

Das Auskristallisieren (Ausfallen) der Solute in den Membranen muss verhindert werden. Dies kann durch Zugabe von Antibelagmitteln (engl. *Antiscaling*) oder Säuren erreicht werden. Antibelagmittel sind hier polymere Verbindungen auf Phosphat- oder Maleinsäurebasis, welche die sich bildenden Kristallite umschließen und so verhindern, dass kristalline Ausfällungen auf der Membran entstehen können. Eine Reinigung der Membran kann dennoch erforderlich bleiben. Um Beschädigungen der Membran zu verhindern, können zudem Filter vorgeschaltet werden. Ein Feinfilter kann mechanische, ein Aktivkohlefilter chemische Beschädigungen (z. B. durch Chlor) verhindern.

Bei der Umkehrosmose wird ein zweites Permeat erhalten, das im Wesentlichen nur Diawasser darstellt, das zurück in die Ultrafiltration geführt wird, sowie ein Retentat, in dem Lactose und Mineralien konzentriert sind und das eine Trockenmasse in der Größenordnung von etwa 15 bis etwa 20 Gew.-% besitzt.

### DECALCIFIZIERUNG

Um die zweiwertigen Ionen aus dem Konzentrat der Umkehrosmose zu gewinnen, wird das zweite Retentat R2 durch Zugabe von Basen zunächst auf einen annähernd neutralen pH-Wert im Bereich von 6 bis 8 eingestellt und die Mineralien, die im Wesentlichen lösliche Phosphate darstellen mit einer solchen Menge einer Lösung eines wasserlöslichen Calcium- oder Magnesiumsalzes versetzt, dass schwerlösliche Ca/Mg-Salze gefällt werden. Zur Einstellung des pH-Wertes und zur Fällung werden NaOH, eine wässrige Zubereitung aus Calcium/Magnesiumchlorid und Alkalihydroxid oder Calciumhydroxid eingesetzt. Grundsätzlich können zur Einstellung des pH-Wertes auch andere Alkali- oder Erdalkalibasen, wie z.B. KOH eingesetzt werden. Auch die Natur des Fällungssalzes ist an sich unkritisch, es lassen sich beispielsweise auch Bariumsalze fällen. Die Verwendung von Calcium- und Magnesiumsalzen hat indes den Vorteil, dass das Fällungsmittel kostengünstig und die Salze ein sehr niedriges Löslichkeitsprodukt haben, die Fällung also im Wesentlichen vollständig ist. Auch ohne Zugabe von Fällungsmitteln erfolgt die Demineralisierung in Rührkesseln, wobei es sich als vorteilhaft erwiesen hat, eine Temperatur im Bereich von etwa 50 bis 90 und vorzugsweise von etwa 80 °C einzustellen. Die Fällungszeit liegt typischerweise bei etwa 10 bis 60 und vorzugsweise etwa 15 bis 20 min, wobei diese Angaben nur als Anhaltspunkte zu verstehen sind, da niedrigere Temperaturen längere Reaktionszeiten erfordern und umgekehrt.

### 2. ULTRAFILTRATION

Das Präzipitat aus dem Decalcifizierungsschritt wird einer zweiten Ultrafiltration zugeleitet, für die grundsätzlich die gleichen Verfahrensbedingungen gelten, wie sie vorstehend bereits erläutert worden sind. Es ist bevorzugt, die Ultrafiltration in der Kälte durchzuführen, es ist aber auch möglich, das heiße Präzipitat ohne weitere oder nur nach geringfügiger Kühlung auf die Membran zu geben. Hierbei wird ein drittes Retentat R3 erhalten, in welchem sich im Wesentlichen, d.h. zu etwa 90 Gew.-% die Calcium/Magnesiumsalze finden und das eine Trockenmasse von etwa 8 bis etwa 15 Gew.-% aufweist. Analog wird ein drittes Permeat P3 erhalten, das eine Trockenmasse von etwa 15 bis etwa 25 Gew.-% und vorzugsweise etwa 15 bis etwa 20 Gew.-% aufweist und im Wesentlichen Lactose und daneben die Alkalisalze enthält.

### MISCHUNG

Der Mischungsschritt dient der Herstellung eines standardisierten Milchproduktes, das nachfolgend durch Hydrolyse vollständig von Lactose befreit wird. Dazu wird dem im ersten Schritt erhaltenen proteinreichen ersten Retentat definierte Mengen an Lactose und Mineralien zugesetzt. Ziel ist es insbesondere, ein Produkt zu erhalten, das gegenüber der Ausgangsmilch nur noch etwa 25 % Lactose aufweist, so dass nach der Hydrolyse wieder der gleiche Süßungsgrad erreicht wird. Auch die Zugabe der Mineralien wird mit dem Ziel verfolgt, wieder die ursprüngliche Salzkonzentration und Salzzusammensetzung einzustellen, damit der Geschmackseindruck der Ursprungsmilch erhalten bleibt.

Das erfindungsgemäße Verfahren ist daher des Weiteren in einer spezifischen Ausgestaltungsform dadurch gekennzeichnet, dass man dem ersten Retentat R1
(i) eine solche Menge des Lactosekonzentrats (Permeat P3) zusetzt, dass sich eine Lactosekonzentration von etwa 0,5 bis etwa 2,5 Gew.-% und vorzugsweise von etwa 0,8 bis 1,8 Gew.-% - bezogen auf die resultierende Standardmilch - ergibt, und/oder
(ii) eine solche Menge des Mineralienkonzentrats (Retentat R3) zusetzt, dass sich eine Mineralienkonzentration von etwa 0,6 bis etwa 1,0 Gew.-% und vorzugsweise von etwa 0,8 bis 0,9 Gew.-% - bezogen auf die resultierende Standardmilch - ergibt, und/oder
(iii) eine solche Menge des Lactosekonzentrats (Permeat P3) sowie des Mineralienkonzentrats (Retentat R3) zusetzt, so dass sich durch die Verdünnung eine Proteinkonzentration von etwa 3,0 bis etwa 10,0 Gew.-% und vorzugsweise von etwa 3,5 bis etwa 3,7 Gew.-% - bezogen auf die resultierende Standardmilch - ergibt.

### HYDROLYSE

Lactose gehört zur Gruppe der Disaccharide und besteht aus den beiden Molekülen D-Galactose und D-Glucose, die über eine β-1,4-glycosidische Bindung verbunden sind.

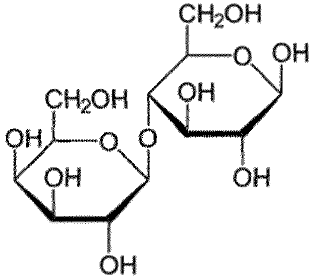

Zum Abbau in die beiden Zuckerkomponenten wird Lactose mit dem Enzym Lactase (auch als LPH oder *LCT* bezeichnet) versetzt. Die Hydrolyse erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen des aktivierten Enzyms, das im Laufe der Zeit sedimentiert. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 4 bis etwa 65 °C und vorzugsweise im Bereich von 20 bis 30°C sowie einem leicht sauren pH-Wert von etwa 5 bis 6 durchzuführen.

### REFERENZZEICHEN IN DER ABBILDUNG

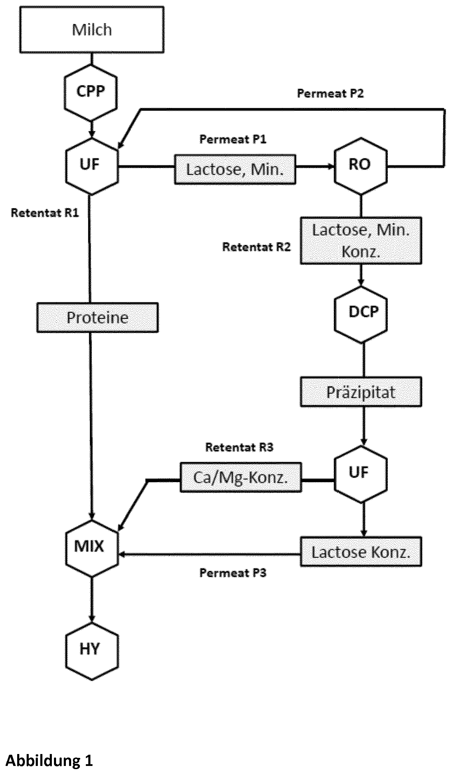

Die erfindungsgemäße erste Verfahrensvariante wird schematisch in **Abbildung 1** zusammengefasst. Dabei bedeuten die Abkürzungen:
CPP = Calciumpräzipitationsprozess
UF = Ultrafiltration
RF = Umkehrosmose
DCP = Decalcifizierung
MIX = Vermischung
HY = Hydrolyse

### VERFAHRENSVARIANTE 2

In einer zweiten Ausgestaltung der vorliegenden Erfindung wird ein Verfahren zur Herstellung von lactosefreien Produkten beansprucht, welches die folgenden Schritte umfasst:
(a) Hydrolyse einer Ausgangsmilch unter Zugabe von Lactase;
(b) Erwärmen des Hydrolyseproduktes aus Schritt (a) über einen Zeitraum von 5 bis 25 Minuten auf 55 bis 65 °C;
(c) Nanofiltration des Präzipitationsproduktes aus Schritt (b) zur Erzeugung eines ersten Permeats P1 und eines ersten Retentats R1;
(d) Umkehrosmose oder Nanofiltration des ersten Permeats P1 zur Erzeugung eines zweiten Permeats P2 und eines zweiten Retentats R2;
(e) Vermischen des ersten Retentats R1 mit jeweils einer solchen Menge des zweiten Permeats P2 sowie zweiten Retentats R2, so dass ein standardisiertes Milchprodukt erhalten wird, dessen Gehalt an Proteinen und Mineralien dem der Ausgangsmilch entspricht, und gegebenenfalls
(f) Hydrolyse des standardisierten Milchproduktes aus Schritt (e) unter Zugabe einer solchen Menge an Lactase, dass die noch im Produkt enthaltene Restmenge an Lactose vollständig in Glucose und Galactose gespalten wird.

In einer ersten speziellen Ausführungsform dieser zweiten Verfahrensvariante setzt man in Schritt (a) eine solche Menge Lactase ein, dass die im Produkt enthaltene Menge an Lactose vollständig in Glucose und Galactose gespalten wird. Dies bedeutet, dass alle weiteren Prozessschritte mit einer bereits lactosefreien Milch durchgeführt werden, deren Mineralienkonzentration und Zusammensetzung noch an die der Ausgangsmilch angepasst werden muss.

In einer alternativen zweiten Ausführungsform umfasst das Verfahren einen weiteren Hydrolyseschritt (f). Diese Ausführungsform der Erfindung kommt dann zum Tragen, wenn im Schritt (a) eine Menge an Lactase eingesetzt worden ist, die gerade nicht ausreicht, um die Gesamtmenge an Lactose zu spalten.

Im Rahmen dieser zweiten Verfahrensvariante wird die Milch zunächst einer Hydrolyse unterworfen, in der jeweils ein Molekül Lactose in ein Molekül Glucose und ein Molekül Galactose gespalten wird. Anschließend wird das Hydrolyseprodukt in eine Proteinfraktion und eine Kohlenhydratfraktion aufgetrennt, letztere zunächst aufkonzentriert und dann der Proteinfraktion unter Zugabe von Wasser in solchen Mengen wieder zugesetzt ("Standardisierung"), dass sich die Protein- und Mineralienzusammensetzung der Ausgangsmilch wieder ergibt. Untersuchungen zur relativen Süßkraft (rS) verschiedener Kohlenhydrate bezogen auf Saccharose (nach Noeske, 1996) ergaben, dass sowohl Glucose (rS=64) als auch Galactose (rS=60) jeweils in etwa die doppelte Süßkraft im Vergleich zu Lactose (rS=30) aufweisen. Vorzugsweise stellt man also den Gehalt an Glucose und Galactose auf einen Wert ein, mit dem der Süßungsgrad der Ausgangsmilch erreicht wird. Dadurch, dass man der Milch bei der Standardisierung keine Fremdsalze, sondern Eigensalze zusetzt, wird nach der Hydrolyse in Summe ein Produkt erhalten, das zwar lactosefrei ist, sich aber ansonsten in der Zusammensetzung von der Ausgangsmilch nicht unterscheidet und daher den gleichen Geschmackseindruck aufweist.

### HYDROLYSE

Als Ausgangsstoff kommen wieder Vollmilch, Magermilch oder standardisierte Milch mit einem Lactosegehalt im Bereich von etwa 3 bis etwa 5 Gew.-% und vorzugsweise etwa 4 bis etwa 4,5 Gew.-% in Frage. Zum Abbau in die beiden Zuckerkomponenten wird Lactose mit dem Enzym Lactase (auch als LPH oder *LCT* bezeichnet) versetzt. Die Hydrolyse erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen desaktivierten Enzyms, das im Laufe der Zeit sedimentiert. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 4 bis etwa 65 °C und vorzugsweise im Bereich von 20 bis 30°C sowie einem leicht sauren pH-Wert von etwa 5 bis 6 durchzuführen.

### 1. NANOFILTRATION

Im zweiten Verfahrensschritt wird das Hydrolyseprodukt, in eine Proteinfraktion und eine Kohlenhydratfraktion aufgetrennt.

Die Nanofiltration gehört zu den Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch *"Cut-off"*) bei 100 nm oder darüber, spricht man von Mikrofiltration. Liegt die Ausschlussgrenze in dem Bereich zwischen 2 bis 100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 40 bar liegt.

Die Ausschlussgrenzen von Nanofiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

In einer bevorzugten Ausführungsform des erfindungsgemäßen Verfahrens wird die Nanofiltration unter Zugabe einer solchen Menge Diawassers durchgeführt, dass ein erstes Retentat mit einem Verdünnungsfaktor von etwa 1 bis etwa 10 erhalten und vorzugsweise etwa 3 erhalten wird. Vorzugsweise bezieht man dabei das Diawasser aus dem zweiten Permeat P2 der nachfolgenden Umkehrosmose.

Für die Nanofiltration haben sich offenporige Membranen als besonders geeignet erwiesen, die einen Porendurchmesser im Bereich von etwa 100 bis etwa 1.000 und vorzugsweise etwa 500 bis etwa 800 Dalton besitzen.

Der Werkstoff der Filterfläche kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Nanofiltration kann im Sinne der vorliegenden Erfindung "heiß" oder "kalt", d.h. im Temperaturbereich von etwa 4 bis etwa 55 °C durchgeführt werden. Bevorzugt ist es jedoch, bei Temperaturen im niedrigen Bereich von etwa 4 bis etwa 25 °C und insbesondere etwa 6 bis etwa 15 °C zu arbeiten.

### UMKEHROSMOSE

Das erste Permeat P1 der Nanofiltration ist praktisch frei von Proteinen, enthält jedoch Glucose, Galactose und Mineralien in gegenüber der Ausgangsmilch praktisch unveränderten Konzentrationen. In der folgenden Umkehrosmose wird die Menge an diesen beiden Komponenten aufkonzentriert.

Die Umkehrosmose oder Reversosmose ist ein physikalisches Verfahren zur Aufkonzentrierung von in Flüssigkeiten gelösten Stoffen, bei der mit Druck des natürlichen Osmose-Prozesses umgekehrt wird. Das Medium, in dem die Konzentration eines bestimmten Stoffes verringert werden soll, ist durch eine halbdurchlässige (semipermeable) Membran von dem Medium getrennt, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen.

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die übrigen Moleküle zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren.

Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen. Druckaustauscher senken durch Energierückgewinnung sehr effektiv die Betriebskosten einer Umkehrosmoseanlage. Der Energieaufwand pro Kubikmeter Wasser liegt bei 4 bis 9 kWh. Vorzugsweise beträgt der Konzentrierungsfaktor im erfindungsgemäßen Verfahren etwa 2,5 bis etwa 5 und insbesondere etwa 3 bis etwa 4.

Das Auskristallisieren (Ausfallen) der Solute in den Membranen muss verhindert werden. Dies kann durch Zugabe von Antibelagmitteln (engl. *Antiscoling*) oder Säuren erreicht werden. Antibelagmittel sind hier polymere Verbindungen auf Phosphat- oder Maleinsäurebasis, welche die sich bildenden Kristallite umschließen und so verhindern, dass kristalline Ausfällungen auf der Membran entstehen können. Eine Reinigung der Membran kann dennoch erforderlich bleiben. Um Beschädigungen der Membran zu verhindern, können zudem Filter vorgeschaltet werden. Ein Feinfilter kann mechanische, ein Aktivkohlefilter chemische Beschädigungen (z. B. durch Chlor) verhindern.

Bei der Umkehrosmose wird ein zweites Permeat erhalten, das im Wesentlichen nur Diawasser darstellt, das zurück in die Nanofiltration geführt werden kann, sowie ein Retentat, in dem Kohlenhydrate und Mineralien enthalten sind und das gegebenenfalls nach weiterer Konzentrierung (z.B. durch Eindampfen) eine Trockenmasse in der Größenmasse von etwa 10 bis etwa 15 Gew.-% besitzt.

### 2. NANOFILTRATION

Alternativ kann statt der Umkehrosmose auch eine zweite Nanofiltration erfolgen. Dabei kommen dann allerdings vorzugsweise Membranen mit einem Porendurchmesser von etwa 150 bis etwa 200 Dalton, zum Einsatz. Permeat und Retentat sind in ihrer Zusammensetzung den Produkten aus der Umkehrosmose sehr ähnlich; lediglich weist das Permeat der Nanofiltration einen höheren Gehalt an einwertigen Salzen auf. Auch dieses Permeat kann als Diafiltrationsmedium genutzt werden. Gleichwertig zu einer Nanofiltration ist eine geschlossene Ultrafiltration mit Membranen, die eine ähnliche Trenngrenze wie Nanofiltrationsmembranen aufweisen.

### MISCHUNG

Der Mischungsschritt dient der Herstellung eines standardisierten Milchproduktes, das nachfolgend - falls noch erforderlich - durch eine weitere Hydrolyse vollständig von Lactose befreit wird. Dazu wird dem im ersten Schritt erhaltenen proteinreichen ersten Retentat definierte Mengen an Kohlenhydraten (Glucose und Galactose) und Mineralien zugesetzt. Ziel ist es insbesondere, ein Produkt zu erhalten, das gegenüber der Ausgangsmilch eine entsprechend angepasste Zuckerkonzentration aufweist, um den gleichen Süßungsgrad zu erhalten. Auch die Zugabe der Mineralien wird mit dem Ziel verfolgt, wieder die ursprüngliche Salzkonzentration und Salzzusammensetzung einzustellen, damit der Geschmackseindruck der Ursprungsmilch erhalten bleibt.

Das erfindungsgemäße Verfahren ist daher des Weiteren in einer spezifischen Ausgestaltungsform dadurch gekennzeichnet, dass man dem ersten Retentat R1
(i) eine solche Menge des zweiten Retentats R2 zusetzt, dass sich eine Konzentration an Glucose und Galactose von gemeinsam etwa 1,0 bis etwa 3,5 Gew.-%, vorzugsweise etwa 1,5 bis etwa 3,0 Gew.-% - bezogen auf die resultierende Standardmilch - ergibt und/oder
(ii) eine solche Menge des zweiten Permeats P2 zusetzt, dass sich eine Mineralienkonzentration von etwa 0,6 bis etwa 1,0 Gew.-% - bezogen auf die resultierende Standardmilch -ergibt, und/oder
(iii) eine solche Menge des zweiten Permeats P2 zusetzt, so dass sich durch die Verdünnung eine Proteinkonzentration von etwa 3,0 bis etwa 10,0 Gew.-% und insbesondere von etwa 3,5 bis etwa 3,7 Gew.-% - bezogen auf die resultierende Standardmilch - ergibt.

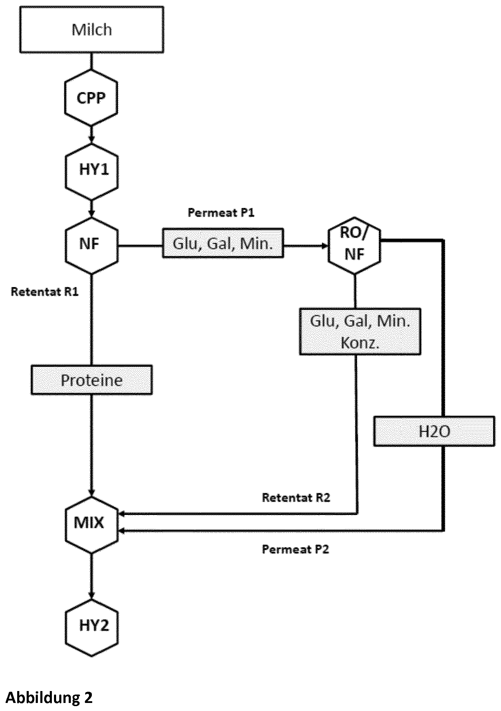

### REFERENZZEICHEN IN DER ABBILDUNG 2

Die erfindungsgemäße zweite Verfahrensvariante wird schematisch in **Abbildung 2** zusammengefasst. Dabei bedeuten die Abkürzungen:
CPP = Calciumpräzipitationsprozess
NF = Nanofiltration
RO = Umkehrosmose
MIX = Vermischung
HY = Hydrolyse
Glu = Glucose
Gal = Galactose
Min = Mineralien

### VERFAHRENSVARINATE 3

In einer dritten Ausgestaltung der vorliegenden Erfindung wird ein Verfahren zur Herstellung von wiederum lactosefreien Produkten beansprucht, welches die folgenden Schritte umfasst:
(a) Erwärmen einer Ausgangsmilch über einen Zeitraum von 5 bis 25 Minuten auf 55 bis 65 °C;
(b) Ultrafiltration des Präzipitationsproduktes aus Schritt (a) zur Erzeugung eines ersten Permeats P1 und eines ersten Retentats R1;
(c) Nanofiltration des ersten Permeats P1 zur Erzeugung eines zweiten Permeats P2 und eines zweiten Retentats R2;
(d) Hydrolyse des zweiten Retentats R2 unter Zugabe von Lactase;
(e) Vermischen des ersten Retentats R1 mit jeweils einer solchen Menge des zweiten Permeats P2 sowie des Hydrolyseproduktes aus Schritt (d), so dass ein standardisiertes Milchprodukt erhalten wird, dessen Gehalt an Proteinen und Mineralien dem der Ausgangsmilch entspricht sowie gegebenenfalls
(f) Hydrolyse des standardisierten Milchproduktes aus Schritt (e) unter Zugabe einer solchen Menge an Lactase, dass die noch im Produkt enthaltene Restmenge an Lactose vollständig in Glucose und Galaktose gespalten wird.

In einer ersten speziellen Ausführungsform dieser dritten Verfahrensvariante setzt man in Schritt (d) eine solche Menge Lactase ein, dass die im Produkt enthaltene Menge an Lactose vollständig in Glucose und Galaktose gespalten wird. Dies bedeutet, dass alle weiteren Prozessschritte mit einer bereits lactosefreien Milch durchgeführt werden, deren Mineralienkonzentration und Zusammensetzung noch an die der Ausgangsmilch angepasst werden muss.

In einer alternativen zweiten Ausführungsform umfasst das Verfahren einen weiteren Hydrolyseschritt (f). Diese Ausführungsform der Erfindung kommt dann zum Tragen, wenn im Schritt (a) eine Menge an Lactase eingesetzt worden ist, die gerade nicht ausreicht, um die Gesamtmenge an Lactose zu spalten.

Im Rahmen dieser dritten Verfahrensvariante wird die Milch zunächst durch Ultrafiltration in eine proteinreiche/lactosearme und eine lactosereiche/proteinarme Fraktion aufgetrennt. Letztere wird in ihrem Lactosegehalt durch Nanofiltration noch einmal konzentriert, bevor sie einer Hydrolyse unterworfen wird, in der jeweils ein Molekül Lactose in ein Molekül Glucose und ein Molekül Galaktose gespalten wird. Anschließend wird das Hydrolyseprodukt der Proteinfraktion unter Zugabe des Permeats aus der Nanofiltration in solchen Mengen wieder zugesetzt ("Standardisierung"), dass sich die Protein- und Mineralienzusammensetzung der Ausgangsmilch wieder ergibt. Untersuchungen zur relativen Süßkraft (rS) verschiedener Kohlenhydrate bezogen auf Saccharose (nach Noeske, 1996) ergaben, dass sowohl Glucose (rS=64) als auch Galactose (rS=60) jeweils in etwa die doppelte Süßkraft im Vergleich zu Lactose (rS=30) aufweisen. Vorzugsweise stellt man also den Gehalt an Glucose und Galaktose auf einen Wert ein, mit dem der Süßungsgrad der Ausgangsmilch erreicht wird. Dadurch, dass man der Milch bei der Standardisierung keine Fremdsalze, sondern Eigensalze zusetzt, wird nach der Hydrolyse in Summe ein Produkt erhalten, das zwar lactosefrei ist, sich aber ansonsten in der Zusammensetzung von der Ausgangsmilch nicht unterscheidet und daher den gleichen Geschmackseindruck aufweist.

### ULTRAFILTRATION

Im ersten Verfahrensschritt wird die Ausgangsmilch, bei der es sich um Vollmilch, Magermilch oder standardisierte Milch mit einem Lactosegehalt im Bereich von etwa 3 bis etwa 5 Gew.-% und vorzugsweise etwa 4 bis etwa 4,5 Gew.-% handeln kann, in eine proteinreiche und lactosearme sowie eine proteinarme und lactosereiche Fraktion aufgetrennt.

Die Ultrafiltration gehört zu den Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch *"Cut-off"*) bei 100 nm oder darüber, spricht man von Mikrofiltration. Liegt die Ausschlussgrenze in dem Bereich zwischen 2 bis 100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

In einer bevorzugten Ausführungsform des erfindungsgemäßen Verfahrens wird die Ultrafiltration unter Zugabe einer solchen Menge Diawassers durchgeführt, dass ein erstes Retentat mit einem Verdünnungsfaktor von etwa 5 bis etwa 20 erhalten und vorzugsweise etwa 8 bis 12 erhalten wird.

Für die Ultrafiltration haben sich Membranen als besonders geeignet erwiesen, die einen Porendurchmesser im Bereich von etwa 1.000 bis etwa 50.000 und vorzugsweise etwa 2.000 bis etwa 25.000 Dalton besitzen. Dem hingegen bevorzugt beispielsweise die Nanofiltration Porendurchmesser im Bereich von 100 bis 1.000 und vorzugsweise etwa 150 bis etwa 800 Dalton.

Der Werkstoff der Filterfläche kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Ultrafiltration kann im Sinne der vorliegenden Erfindung "heiß" oder "kalt", d.h. im Temperaturbereich von etwa 4 bis etwa 55 °C durchgeführt werden. Bevorzugt ist es jedoch, bei Temperaturen im niedrigen Bereich von etwa 4 bis etwa 25 °C und insbesondere etwa 8 bis etwa 18 °C zu arbeiten. Gegebenenfalls kann es vorteilhaft sein, den zu filtrierenden Strom auf einen pH-Wert im Bereich von etwa 4 bis etwa 6 einzustellen; dies kann beispielsweise durch Dosierung von Kohlendioxid erfolgen.

### NANOFILTRATION

Im zweiten Verfahrensschritt wird das Permeat der Ultrafiltration, das reich an Lactose ist, einer Nanofiltration unterworfen, bei der ein Retentat erhalten wird, das weiter an Lactose und Mineralien aufkonzentriert ist. Bei dem Permeat handelt es sich um mehr oder weniger reines Wasser, das noch maximal 0,5 Gew.-% Salze enthält.

Die Nanofiltration kann wie oben beschrieben unter den gleichen Bedingungen und mit den gleichen Bauteilen durchgeführt werden. Dabei kommen jedoch Membranen in Betracht, die einen Porendurchmesser im Bereich von etwa 100 bis etwa 1.000 Dalton und vorzugsweise etwa 150 bis 250 Dalton.

### HYDROLYSE

Zum Abbau in die beiden Zuckerkomponenten wird Lactose mit dem Enzym Lactase (auch als LPH oder *LCT* bezeichnet) versetzt. Die Hydrolyse erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen desaktivierten Enzyms, das im Laufe der Zeit sedimentiert. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 4 bis etwa 65 °C, vorzugsweise im Bereich von 20 bis 30°C sowie einem leicht sauren pH-Wert von etwa 5 bis 6 durchzuführen.

### VERMISCHEN

Der Mischungsschritt dient der Herstellung eines standardisierten lactosefreien Milchproduktes, Dazu wird dem im ersten Schritt erhaltenen proteinreichen ersten Retentat definierte Mengen an Kohlenhydraten und Mineralien zugesetzt. Ziel ist es insbesondere, ein Produkt zu erhalten, das gegenüber der Ausgangsmilch eine entsprechend angepasste Zuckerkonzentration aufweist, d.h. der Süßungsgrad gleich bleibt. Auch die Zugabe der Mineralien wird mit dem Ziel verfolgt, wieder die ursprüngliche Salzkonzentration und Salzzusammensetzung einzustellen, damit der Geschmackseindruck der Ursprungsmilch erhalten bleibt.

Das erfindungsgemäße Verfahren ist daher des Weiteren in einer spezifischen Ausgestaltungsform dadurch gekennzeichnet, dass man dem ersten Retentat R1
(i) eine solche Menge des Hydrolyseproduktes zusetzt, dass sich eine Konzentration an Glucose und Galaktose von gemeinsam etwa 1,0 bis etwa 3,5 Gew.-% und vorzugsweise etwa 1,5 bis etwa 3,0 Gew.-% - bezogen auf die resultierende Standardmilch - ergibt;
(ii) eine solche Menge des zweiten Permeats P2 zusetzt, dass sich eine Mineralienkonzentration von etwa 0,6 bis etwa 1,0 Gew.-% - bezogen auf die resultierende Standardmilch - ergibt.
(iii) eine solche Menge des zweiten Permeats P2 zusetzt, so dass sich durch die Verdünnung eine Proteinkonzentration von etwa 3,0 bis etwa 10,0 Gew.-% und insbesondere etwa 3,5 bis etwa 3,7 Gew.-% bezogen auf die resultierende Standardmilch - ergibt.

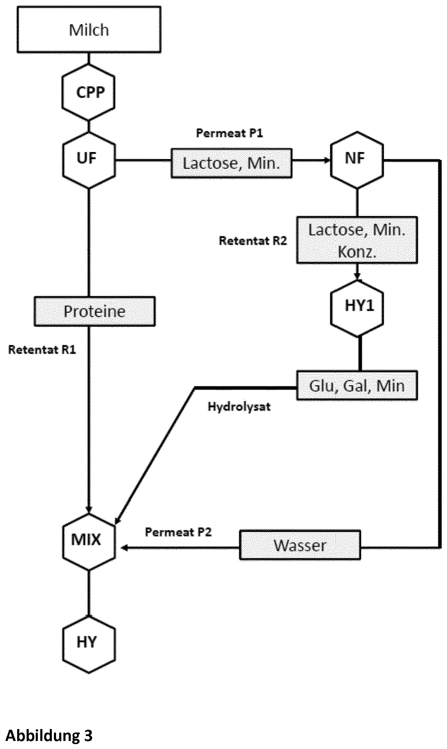

### REFERENZZEICHEN IN DER ABBILDUNG 3

Die dritte Verfahrensvariante wird schematisch in **Abbildung 3** zusammengefasst. Dabei bedeuten die Abkürzungen:
- CPP: = Calciumpräzipitationsprozess
- UF: = Ultrafiltration
- NF: = Nanofiltration
- MIX: = Vermischung
- HY: = Hydrolyse
- Glu: = Glucose
- Gal: = Galaktose
- Min: = Mineralien

### BEISPIELE

### BEISPIEL 1

100 kg Milch folgender Zusammensetzung

| **MILCH** | **Menge [Gew.-%]** |
|---|---|
| Lactose | 4,0 |
| Proteine | 3,5 |
| Mineralien | 0,8 |

wurden zunächst über einen Zeitraum von 20 Minuten einer Wärmebehandlung bei 60 °C unterzogen und dann nach Abkühlung auf 10°C einer ersten Ultrafiltration unter Zugabe von Diawasser unterworfen. Der Verdünnungsfaktor betrug 10, wobei als Zwischenprodukt ein proteinreiches erstes Retentat R1 erhalten wurde, welches die folgende Zusammensetzung aufwies:

| **RETENTAT R1** | **Menge [Gew.-%]** |
|---|---|
| Lactose | 0,4 |
| Proteine | 11,0 |
| Mineralien | 0,08 |

Gleichzeitig wurde ein proteinarmes erstes Permeat P1 erhalten, welches die folgende Zusammensetzung aufwies:

| **PERMEAT P1** | **Menge [Gew.-%]** |
|---|---|
| Lactose | 4,0 |
| Proteine | < 0,1 |
| Mineralien | 0,8 |

Das erste Permeat P1 wurde bei 10 °C einer Umkehrosmose mit einem Konzentrierungsfaktor 3,5 unterworfen. Dabei wurde ein zweites Permeat P2 erhalten, welches praktisch nur aus (Dia-)Wasser bestand, das in den Ultrafiltrationsschritt zurückgeführt wurde. Das bei der Umkehrosmose erhaltene zweite lactosereiche Retentat R2 wies eine Trockenmasse von 18 Gew.-% und folgende Zusammensetzung auf:

| **RETENTAT R2** | **Menge [Gew.-%]** |
|---|---|
| Lactose | 15,5 |
| Proteine | < 0,1 |
| Mineralien | 2,0 |

Das Retentat R2 wurde etwa 20 min auf etwa 80 °C erhitzt und die darin enthaltenen Phosphate durch Zugabe von Calcium/Magnesiumchlorid als Ca/Mg-phosphate gefällt. Das Präzipitat mit der darüberstehenden Lösung wurde anschließend auf etwa 25 °C abgekühlt und einer zweiten Ultrafiltration unterworfen, wobei zum einen ein drittes Retentat R3 mit einer Trockenmasse von 10 Gew.-% erhalten wurde, die zu 90 Gew.-% aus Calcium- und Magnesiumsalzen bestand, sowie ein drittes Permeat P3 mit 17 Gew.-% Trockenmasse der folgenden Zusammensetzung:

| **PERMEAT P3** | **Menge [Gew.-%]** |
|---|---|
| Lactose | 16,0 |
| Proteine | 0,0 |
| Mineralien (Na, K) | 1,0 |

Anschließend wurde das erste Retentat R1 mit einer solchen Menge des Lactosekonzentrats (Permeat P3) sowie des Salzkonzentrats (Retentat R3) versetzt, dass eine standardisierte Milch der folgenden Zusammensetzung resultierte:

| **STANDARDMILCH** | **Menge [Gew.-%]** |
|---|---|
| Lactose | 1,0 |
| Proteine | 3,5 |
| Mineralien | 0,8 |

Die standardisierte Milch wies demnach den gleichen Gehalt an Proteinen sowie die gleiche Menge und Zusammensetzung an Mineralien wie die Ausgangsmilch, jedoch nur etwa ein Viertel der Lactosemenge auf. Bei der nachfolgenden Hydrolyse wurden aus 1,0 Gew.-% Lactose 2,0 Gew.-% an Glucose und Galactose. Auf diese Weise wurde eine lactosefreie Milch erhalten, die gemäß der unterschiedlichen Süßkraft der vorliegenden Kohlenhydrate den gleichen Süßungsgrad und das gleiche Geschmacksprofil wie die ursprüngliche Milch aufwies.

### BEISPIEL 2

100 kg Milch folgender Zusammensetzung

| **MILCH** | **Menge [Gew.-%]** |
|---|---|
| Lactose | 4,0 |
| Proteine | 3,5 |
| Mineralien | 0,8 |

wurden zunächst über einen Zeitraum von 20 Minuten einer Wärmebehandlung bei 60 °C unterzogen und dann in einem Rührkessel bei 25 °C auf pH = 6 eingestellt und mit einer solchen Menge Lactase versetzt, dass sich eine Konzentration von etwa 200.000 FCC Einheiten/kg Lactose ergab. Nach einer Hydrolysezeit von etwa 3 Stunden wurde ein Produkt erhalten, das die folgende Zusammensetzung aufwies:

| **HYDROLYSEPRODUKT** | **Menge [Gew.-%]** |
|---|---|
| Lactose | < 0,1 |
| Glucose | 2,0 |
| Galactose | 2,0 |
| Proteine | 3,5 |
| Mineralien | 0,8 |

Das Hydrolyseprodukt wurde anschließend bei 10°C einer ersten Nanofiltration mit einer offenporigen Membran mit einer Porenweite von 600 Dalton unter Zugabe von Diawasser unterworfen. Der Verdünnungsfaktor betrug 3, wobei als Zwischenprodukt ein proteinreiches erstes Retentat R1 erhalten wurde, welches die folgende Zusammensetzung aufwies:

| **RETENTAT R1** | **Menge [Gew.-%]** |
|---|---|
| Lactose | < 0,1 |
| Glucose | 2,0 |
| Galactose | 2,0 |
| Proteine | 11,0 |
| Mineralien | 0,8 |

Gleichzeitig wurde ein proteinarmes erstes Permeat P1 erhalten, welches die folgende Zusammensetzung aufwies:

| **PERMEAT P1** | **Menge [Gew.-%]** |
|---|---|
| Lactose | < 0,1 |
| Glucose | 2,0 |
| Galactose | 2,0 |
| Proteine | < 0,1 |
| Mineralien | 0,4 |

Das erste Permeat P1 wurde bei 10 °C einer Umkehrosmose mit einem Konzentrierungsfaktor 3,5 unterworfen. Dabei wurde ein zweites Permeat P2 erhalten, welches praktisch nur aus Wasser bestand. Das bei der Umkehrosmose erhaltene zweite kohlenhydratreiche Retentat R2 wies eine Trockenmasse von etwa 13 Gew.-% und folgende Zusammensetzung auf:

| **RETENTAT R2** | **Menge [Gew.-%]** |
|---|---|
| Lactose | < 0,1 |
| Glucose | 6,0 |
| Galactose | 6,0 |
| Proteine | < 0,1 |
| Mineralien | 1,2 |

Anschließend wurde das Retentat R1 mit einer solchen Menge kohlenhydratreichen Retentats R2 sowie des Permeats P2 versetzt, dass eine standardisierte Milch der folgenden Zusammensetzung resultierte:

| **STANDARDMILCH** | **Menge [Gew.-%]** |
|---|---|
| Lactose | < 0,1 |
| Glucose | 1,0 |
| Galactose | 1,0 |
| Proteine | 3,5 |
| Mineralien | 0,8 |

Die standardisierte Milch wies demnach den gleichen Gehalt an Proteinen sowie die gleiche Menge und Zusammensetzung an Mineralien wie die Ausgangsmilch auf, enthielt jedoch nur die entsprechende Menge an Glucose und Galactose, mit der die gleiche Süßkraft der Ausgangsmilch erzielt wurde. Auf diese Weise wurde eine lactosefreie Milch erhalten, die den gleichen Süßungsgrad und das gleiche Geschmacksprofil wie die ursprüngliche Milch aufwies.

### BEISPIEL 3

100 kg Milch folgender Zusammensetzung

| **MILCH** | **Menge [Gew.-%]** |
|---|---|
| Lactose | 4,0 |
| Proteine | 3,5 |
| Mineralien | 0,8 |

wurden zunächst über einen Zeitraum von 20 Minuten einer Wärmebehandlung bei 60 °C unterzogen und dann in einem Rührkessel bei 25 °C auf pH = 6 eingestellt und mit einer solchen Menge Lactase versetzt, dass sich eine Konzentration von etwa 200.000 FCC Einheiten/kg Lactose ergab. Nach einer Hydrolysezeit von etwa 3 Stunden wurde ein Produkt erhalten, das die folgende Zusammensetzung aufwies:

| **HYDROLOYSEPRODUKT** | **Menge [Gew.-%]** |
|---|---|
| Lactose | < 0,1 |
| Glucose | 2,0 |
| Galactose | 2,0 |
| Proteine | 3,5 |
| Mineralien | 0,8 |

Das Hydrolyseprodukt wurde anschließend bei 10°C einer Nanofiltration mit einer offenporigen Membran mit einer Porenweite von 600 Dalton unter Zugabe von Diawasser unterworfen. Der Verdünnungsfaktor betrug 3, wobei als Zwischenprodukt ein proteinreiches erstes Retentat R1 erhalten wurde, welches die folgende Zusammensetzung aufwies:

| **RETENTAT R1** | **Menge [Gew.-%]** |
|---|---|
| Lactose | < 0,1 |
| Glucose | 2,0 |
| Galactose | 2,0 |
| Proteine | 11,0 |
| Mineralien | 0,8 |

Gleichzeitig wurde ein proteinarmes erstes Permeat P1 erhalten, welches die folgende Zusammensetzung aufwies:

| **PERMEAT P1** | **Menge [Gew.-%]** |
|---|---|
| Lactose | < 0,1 |
| Glucose | 2,0 |
| Galactose | 2,0 |
| Proteine | < 0,1 |
| Mineralien | 0,4 |

Das erste Permeat P1 wurde bei 10 °C einer zweiten Nanofiltration mit einer Membran mit einer Porenweite von 150 Dalton mit einem Konzentrierungsfaktor 3,5 unterworfen. Dabei wurde ein zweites Permeat P2 erhalten, welches praktisch nur aus Wasser sowie Alkalisalzen bestand. Das bei der Nanofiltration erhaltene zweite kohlenhydratreiche Retentat R2 wies eine Trockenmasse von etwa 13 Gew.-% und folgende Zusammensetzung auf:

| **RETENTAT R2** | **Menge [Gew.-%]** |
|---|---|
| Lactose | < 0,1 |
| Glucose | 6,0 |
| Galactose | 6,0 |
| Proteine | < 0,1 |
| Mineralien | 1,2 |

Anschließend wurde das erste Retentat R1 mit einer solchen Menge kohlenhydratreichen zweiten Retentats R2 sowie des zweiten Permeats P2 versetzt, dass eine standardisierte Milch der folgenden Zusammensetzung resultierte:

| **STANDARDMILCH** | **Menge [Gew.-%]** |
|---|---|
| Lactose | < 0,1 |
| Glucose | 1,0 |
| Galactose | 1,0 |
| Proteine | 3,5 |
| Mineralien | 0,8 |

Die standardisierte Milch wies demnach den gleichen Gehalt an Proteinen sowie die gleiche Menge und Zusammensetzung an Mineralien wie die Ausgangsmilch auf. Die Gesamtmenge an Kohlenhydraten (Glucose + Galactose) betrug 2 Gew.-% Auf diese Weise wurde eine lactosefreie Milch erhalten, die den gleichen Süßungsgrad und das gleiche Geschmacksprofil wie die ursprüngliche Milch aufwies.

### BEISPIEL 4

100 kg Milch folgender Zusammensetzung

| **MILCH** | **Menge [Gew.-%]** |
|---|---|
| Lactose | 4,0 |
| Proteine | 3,5 |
| Mineralien | 0,8 |

wurden zunächst über einen Zeitraum von 20 Minuten einer Wärmebehandlung bei 60 °C unterzogen und dann bei 10°C einer ersten Ultrafiltration unter Zugabe von Diawasser unterworfen. Der Verdünnungsfaktor betrug 10, wobei als Zwischenprodukt ein proteinreiches erstes Retentat R1 erhalten wurde, welches die folgende Zusammensetzung aufwies:

| **RETENTAT R1** | **Menge [Gew.-%]** |
|---|---|
| Lactose | 0,4 |
| Proteine | 11,0 |
| Mineralien | 0,08 |

Gleichzeitig wurde ein proteinarmes erstes Permeat P1 erhalten, welches die folgende Zusammensetzung aufwies:

| **PERMEAT P1** | **Menge [Gew.-%]** |
|---|---|
| Lactose | 4,0 |
| Proteine | < 0,1 |
| Mineralien | 0,8 |

Das Permeat P1 wurde anschließend bei 10 °C einer Nanofiltration mit einer Membran mit einer Porenweite von 800 Dalton unterworfen, wobei ein zweites Retentat R2 mit einer Trockenmasse von etwa 18 Gew.-% und folgender Zusammensetzung erhalten wurde:

| **RETENTAT R2** | **Menge [Gew.-%]** |
|---|---|
| Lactose | 13,0 |
| Proteine | < 0,1 |
| Mineralien | 2,0 |

Gleichzeitig wurde ein zweites Permeat P2 erhalten, welches aus Wasser mit einem Gehalt von 0,3 Gew.-% Salzen bestand.

Das zweite Retentat R2 wurde in einem Rührkessel bei 25 °C auf pH = 6 eingestellt und mit einer solchen Menge Lactase versetzt, dass sich eine Konzentration von etwa 200.000 FCC Einheiten/kg Lactose ergab. Nach einer Hydrolysezeit von etwa 3 Stunden wurde ein Produkt erhalten, das die folgende Zusammensetzung aufwies:

| **HYDROLYSEPRODUKT** | **Menge [Gew.-%]** |
|---|---|
| Lactose | < 0,1 |
| Glucose | 13,0 |
| Galaktose | 13,0 |
| Proteine | < 0,1 |
| Mineralien | 2,0 |

Anschließend wurde das Retentat R1 mit einer solchen Menge an Hydrolyseprodukt sowie des zweiten Permeats P2 versetzt, dass eine standardisierte Milch der folgenden Zusammensetzung resultierte:

| **STANDARDMILCH** | **Menge [Gew.-%]** |
|---|---|
| Lactose | < 0,1 |
| Glucose | 1,0 |
| Galaktose | 1,0 |
| Proteine | 3,5 |
| Mineralien | 0,8 |

Die standardisierte Milch wies demnach den gleichen Gehalt an Proteinen sowie die gleiche Menge und Zusammensetzung an Mineralien wie die Ausgangsmilch auf. Die Gesamtmenge an Kohlenhydraten (Glucose + Galaktose) betrug 2 Gew.-% Auf diese Weise wurde eine lactosefreie Milch erhalten, die den gleichen Süßungsgrad und das gleiche Geschmacksprofil wie die ursprüngliche Milch aufwies.

## Patentansprüche

1. Verfahren zur Herstellung von Milchprodukten mit Lactosegehalt unter 0,1 Gew.-% welches sich dadurch auszeichnet, dass die Ausgangsmilch oder deren Hydrolyseprodukt vor der Weiterbehandlung einem Schritt unterworfen wird, bei dem die überwiegende Menge an Calcium gefällt wird, umfassend die folgenden Schritte:
(a1) Erwärmen einer Ausgangsmilch über einen Zeitraum von 5 bis 25 Minuten auf 55 bis 65 °C;
(a2) Ultrafiltration des Präzipitationsproduktes aus Schritt (a) zur Erzeugung eines ersten Permeats P1 und eines ersten Retentats R1;
(a3) Umkehrosmose des ersten Permeats P1 zur Erzeugung eines zweiten Permeats P2 und eines zweiten Retentats R2;
(a4) Decalcifizierung des zweiten Retentats R2;
(a5) Ultrafiltration des decalcifizierten Produktes aus Schritt (a4) zur Erzeugung eines dritten Permeats P3 (Lactosekonzentrat) und eines dritten Retentats R3 (Mineralienkonzentrat);
(a6) Vermischen des ersten Retentats R1 mit jeweils einer solchen Menge des dritten Permeats P3 sowie des dritten Retentats R3, so dass ein standardisiertes Milchprodukt mit einer definierten Konzentration an Lactose und Salzen erhalten wird sowie
(a7) Hydrolyse des standardisierten Milchproduktes aus Schritt (a6) unter Zugabe einer solchen Menge an Lactase, dass die im Produkt enthaltene Menge an Lactose vollständig in Glucose und Galactose gespalten wird;
oder
(b1) Hydrolyse einer Ausgangsmilch unter Zugabe von Lactase;
(b2) Erwärmen des Hydrolyseproduktes aus Schritt (b1) über einen Zeitraum von 5 bis 25 Minuten auf 55 bis 65 °C;
(b3) Nanofiltration des Präzipitationsproduktes aus Schritt (b2) zur Erzeugung eines ersten Permeats P1 und eines ersten Retentats R1;
(b4) Umkehrosmose oder Nanofiltration des ersten Permeats P1 zur Erzeugung eines zweiten Permeats P2 und eines zweiten Retentats R2;
(b5) Vermischen des ersten Retentats R1 mit jeweils einer solchen Menge des zweiten Permeats P2 sowie zweiten Retentats R2, so dass ein standardisiertes Milchprodukt erhalten wird, dessen Gehalt an Proteinen und Mineralien dem der Ausgangsmilch entspricht, und gegebenenfalls
(b6) Hydrolyse des standardisierten Milchproduktes aus Schritt (b5) unter Zugabe einer solchen Menge an Lactase, dass die noch im Produkt enthaltene Restmenge an Lactose vollständig in Glucose und Galactose gespalten wird;
oder
(c1) Erwärmen einer Ausgangsmilch über einen Zeitraum von 5 bis 25 Minuten auf 55 bis 65 °C;
(c2) Ultrafiltration des Präzipitationsproduktes aus Schritt (c1) zur Erzeugung eines ersten Permeats P1 und eines ersten Retentats R1;
(c3) Nanofiltration des ersten Permeats P1 zur Erzeugung eines zweiten Permeats P2 und eines zweiten Retentats R2;
(c4) Hydrolyse des zweiten Retentats R2 unter Zugabe von Lactase;
(c5) Vermischen des ersten Retentats R1 mit jeweils einer solchen Menge des zweiten Permeats P2 sowie des Hydrolyseproduktes aus Schritt (c4), so dass ein standardisiertes Milchprodukt erhalten wird, dessen Gehalt an Proteinen und Mineralien dem der Ausgangsmilch entspricht sowie gegebenenfalls
(c6) Hydrolyse des standardisierten Milchproduktes aus Schritt (c5) unter Zugabe einer solchen Menge an Lactase, dass die noch im Produkt enthaltene Restmenge an Lactose vollständig in Glucose und Galaktose gespalten wird.

2. Verfahren nach Anspruch 1, **dadurch gekennzeichnet, dass** man als Ausgangsmilch Vollmilch, Magermilch oder Standardmilch einsetzt.

3. Verfahren nach Anspruch 1 und/oder 2, **dadurch gekennzeichnet, dass** man eine Ausgangsmilch einsetzt, die einen Lactosegehalt im Bereich von 3 bis 5 Gew.-% aufweist.

4. Verfahren nach Anspruch 1, **dadurch gekennzeichnet, dass** man die Ultrafiltration unter Zugabe einer solchen Menge Diawassers durchführt, dass ein erstes Retentat mit einem Verdünnungsfaktor von 5 bis 15 erhalten wird.

5. Verfahren nach Anspruch 4, **dadurch gekennzeichnet, dass** man das Diawasser aus dem zweiten Permeat P2 der Umkehrosmose bezieht.

6. Verfahren nach Anspruch 1, **dadurch gekennzeichnet, dass** man die Ultrafiltrationen mit Hilfe von Membranen durchführt, die einen Porendurchmesser von 1.000 bis 50.000 Dalton aufweisen.

7. Verfahren nach Anspruch 1, **dadurch gekennzeichnet, dass** man die Ultrafiltrationen bei Temperaturen im Bereich von 4 bis 25 °C durchführt.

8. Verfahren nach Anspruch 1, **dadurch gekennzeichnet, dass** man die Umkehrosmose mit einem Konzentrierungsfaktor von 2,5 bis 5 durchführt.

9. Verfahren nach Anspruch 1, **dadurch gekennzeichnet, dass** man die Decalcifizierung durch Zugabe von Calcium- und/oder Magnesiumsalzen durchführt.

10. Verfahren nach Anspruch 1, **dadurch gekennzeichnet, dass** man die Decalcifizierung bei Temperaturen von 50 bis 90 °C und/oder Reaktionszeiten von 10 bis 60 Minuten durchführt.

## Claims

1. Method for the preparation of dairy products with a lactose content less than 0.1 % by weight, which is **characterized in that** the starting milk or its hydrolysis product before further treatment is subjected to a step in which the predominant amount of calcium is precipitated, comprising the following steps:
(a1) heating a starting milk to 55 to 65 °C over a period of 5 to 25 minutes;
(a2) ultrafiltration of the precipitation product of step (a1) to produce a first permeate P1 and a first retentate R1;
(a3) reverse osmosis of the first permeate P1 to produce a second permeate P2 and a second retentate R2;
(a4) decalcifying the second retentate R2;
(a5) ultrafiltration of the decalcified product of step (a4) to produce a third permeate P3 (lactose concentrate) and a third retentate R3 (mineral concentrate);
(a6) mixing the first retentate R1 with in each case such an amount of the third permeate P3 and the third retentate R3 to obtain a standardized milk product with a defined concentration of lactose and salts and
(a7) hydrolysing the standardized milk product from step (a6) adding such an amount of lactase that the amount of lactose contained in the product is completely cleaved into glucose and galactose;
or
(b1) Hydrolysis of a starting milk with the addition of lactase;
(b2) heating the hydrolysis product of step (b1) to about 55 to about 65 °C over a period of about 5 to about 25 minutes;
(b3) nanofiltration of the precipitation product of step (b2) to produce a first permeate P1 and a first retentate R1;
(b4) reverse osmosis or nanofiltration of the first permeate P1 to produce a second permeate P2 and a second retentate R2;
(b5) mixing the first retentate R1 with in each case such an amount of the second permeate P2 and second retentate R2 to obtain a standardized milk product whose content of proteins and minerals corresponds to that of the starting milk, and optionally
(b6) hydrolysis of the standardized milk product from step (b5) with addition of such an amount of lactase that the remaining amount of lactose still contained in the product is completely cleaved into glucose and galactose;
oder
(c1) heating a starting milk to 55 to 65 °C over a period of 5 to 25 minutes;
(c2) ultrafiltration of the precipitation product of step (c1) to produce a first permeate P1 and a first retentate R1;
(c3) nanofiltration of the first permeate P1 to produce a second permeate P2 and a second retentate R2;
(c4) hydrolysis of the second retentate R2 with the addition of lactase;
(c5) mixing the first retentate R1 with in each case such an amount of the second permeate P2 and of the hydrolysis product from step (c4), so that a standardized milk product is obtained whose content of proteins and minerals corresponds to that of the starting milk and optionally
(c6) hydrolysis of the standardized milk product from step (c5) with addition of such an amount of lactase that the remaining amount of lactose still contained in the product is completely cleaved into glucose and galactose.

2. Method according to claim 1, **characterized in that** the starting milk is whole milk, skimmed milk or standard milk.

3. Method according to claims 1 and / or 2, **characterized in that** the starting milk has a lactose content in the range of 3 to 5 % by weight.

4. Method according to claim 1, **characterized in that** the ultrafiltration is carried out with the addition of such an amount of diawater that a first retentate having a dilution factor of 5 to 15 is obtained.

5. Method according to claim 4, **characterized in that** the diawater from the second permeate P2 of the reverse osmosis is used.

6. Method according to claim 1, **characterized in that** the ultrafiltrations are carried out by means of membranes having a pore diameter of about 1.000 to about 50.000 dalton.

7. Method according to claim 1, **characterized in that** the ultrafiltrations are carried out at temperatures in the range of 4 to 25 °C.

8. Method according to claim 1, **characterized in that** the reverse osmosis is carried out with a concentration factor from 2.5 to 5.

9. Method according to claim 1, **characterized in that** the decalcification is carried out by adding calcium and / or magnesium salts.

10. Method according to claim 1, **characterized in that** the decalcification is carried out at temperatures of 50 to 90 °C and / or reaction times of 10 to 60 minutes.

## Revendications

1. Procédé pour la production de produits laitiers présentant une teneur en lactose inférieure à 0,1% en poids, qui est **caractérisé en ce que** le lait de départ ou son produit d'hydrolyse est soumis, avant le traitement ultérieur, à une étape lors de laquelle la quantité principale de calcium est précipitée, comprenant les étapes suivantes :
(a1) chauffage d'un lait de départ pendant un laps de temps de 5 à 25 minutes à 55 jusqu'à 65°C;
(a2) ultrafiltration du produit de précipitation de l'étape (a) en vue d'obtenir un premier perméat P1 et un premier retentat R1 ;
(a3) osmose inverse du premier perméat P1 en vue d'obtenir un deuxième perméat P2 et un deuxième retentat R2 ;
(a4) décalcification du deuxième retentat R2 ;
(a5) ultrafiltration du produit décalcifié de l'étape (a4) en vue d'obtenir un troisième perméat P3 (concentrat de lactose) et un troisième retentat R3 (concentrat de minéraux) ;
(a6) mélange du premier retentat R1 avec à chaque fois une quantité du troisième perméat P3 ainsi que du troisième retentat R3 telle qu'on obtient un produit laitier standardisé présentant une concentration définie en lactose et en sels ainsi que
(a7) hydrolyse du produit laitier standardisé de l'étape (a6) avec addition d'une quantité de lactase telle que la quantité de lactose contenue dans le produit est dissociée complètement en glucose et en galactose ;
ou
(b1) hydrolyse d'un lait de départ avec addition de lactase ;
(b2) chauffage du produit d'hydrolyse de l'étape (b1) pendant un laps de temps de 5 à 25 minutes à 55 jusqu'à 65°C ;
(b3) nanofiltration du produit de précipitation de l'étape (b2) en vue d'obtenir un premier perméat P1 et un premier retentat R1 ;
(b4) osmose inverse ou nanofiltration du premier perméat P1 en vue d'obtenir un deuxième perméat P2 et un deuxième retentat R2 ;
(b5) mélange du premier retentat R1 avec à chaque fois une quantité du deuxième perméat P2 ainsi que du deuxième retentat R2 telle qu'on obtient un produit laitier standardisé dont la teneur en protéines et en minéraux correspond à celle du lait de départ et le cas échéant
(b6) hydrolyse du produit laitier standardisé de l'étape (b5) avec addition d'une quantité de lactase telle que la quantité résiduelle de lactose encore contenue dans le produit est dissociée complètement en glucose et en galactose ;
ou
(c1) chauffage d'un lait de départ pendant un laps de temps de 5 à 25 minutes à 55 jusqu'à 65°C;
(c2) ultrafiltration du produit de précipitation de l'étape (c1) en vue d'obtenir un premier perméat P1 et un premier retentat R1 ;
(c3) nanofiltration du premier perméat P1 en vue d'obtenir un deuxième perméat P2 et un deuxième retentat R2 ;
(c4) hydrolyse du deuxième retentat R2 avec addition de lactase ;
(c5) mélange du premier retentat R1 avec à chaque fois une quantité du deuxième perméat P2 ainsi que du produit d'hydrolyse de l'étape (c4) telle qu'on obtient un produit laitier standardisé dont la teneur en protéines et en minéraux correspond à celle du lait de départ et le cas échéant
(c6) hydrolyse du produit laitier standardisé de l'étape (c5) avec addition d'une quantité de lactase telle que la quantité résiduelle de lactose encore contenue dans le produit est dissociée complètement en glucose et en galactose.

2. Procédé selon la revendication 1, **caractérisé en ce qu'**on utilise, comme lait de départ, du lait entier, du lait maigre ou du lait standardisé.

3. Procédé selon la revendication 1 et/ou 2, **caractérisé en ce qu'**on utilise un lait de départ qui présente une teneur en lactose dans la plage de 3 à 5% en poids.

4. Procédé selon la revendication 1, **caractérisé en ce qu'**on réalise l'ultrafiltration avec addition d'une quantité d'eau de dialyse telle qu'on obtient un premier retentat présentant un facteur de dilution de 5 à 15.

5. Procédé selon la revendication 4, **caractérisé en ce qu'**on utilise l'eau de dialyse provenant du deuxième perméat P2 de l'osmose inverse.

6. Procédé selon la revendication 1, **caractérisé en ce qu'**on réalise les ultrafiltrations à l'aide de membranes qui présentent un diamètre de pore de 1000 à 50.000 daltons.

7. Procédé selon la revendication 1, **caractérisé en ce qu'**on réalise les ultrafiltrations à des températures dans la plage de 4 à 25°C.

8. Procédé selon la revendication 1, **caractérisé en ce qu'**on réalise l'osmose inverse à un facteur de concentration de 2,5 à 5.

9. Procédé selon la revendication 1, **caractérisé en ce qu'**on réalise la décalcification par addition de sels de calcium et/ou de magnésium.

10. Procédé selon la revendication 1, **caractérisé en ce qu'**on réalise la décalcification à des températures de 50 à 90°C et/ou pendant des temps de réaction de 10 à 60 minutes
